# EUROPEAN PATENT APPLICATION

(11) **EP 4 099 750 A1**
(43) Date of publication of application: **07.12.2022**
(21) Application number: 21764276.8
(22) Date of filing: 25.02.2021
(51) Int. Cl.: H04W 24/10, H04W 72/12, H04B 7/06, H04W 92/18, H04W 4/40

(54) **METHOD AND DEVICE FOR REPORT OF CHANNEL STATE INFORMATION FOR SIDELINK COMMUNICATION**

(30) Priority: 06.03.2020 US 202062986073 P; 09.02.2021 KR 20210018544
(71) Applicant: HYUNDAI MOTOR COMPANY, Seoul 06797 (KR); Kia Corporation, Seocho-gu Seoul 06797 (KR); Wonkwang University Center for Industry - Academy Cooperation, Iksan-si, Jeollabuk-do 54538 (KR)
(72) Inventor: SON, Hyuk Min, Iksan-si, Jeollabuk-do 54653 (KR); HAHN, Gene Back, Hwaseong-si, Gyeonggi-do 18280 (KR)
(74) Representative: Isarpatent
(86) International application number: PCT/KR2021/002416
(87) International publication number: WO 2021/177663

(57) **Abstract**

A method and a device for a report of channel state information for sidelink communication are disclosed. An operation method of a first terminal comprises the steps of: transmitting, to a second terminal, information that indicates a delay boundary value of an SL CSI report; transmitting, to the second terminal, SCI including CSI request information; and performing a monitoring operation in order to receive SL CSI about the second terminal in a time slot corresponding to the delay boundary value from the transmission time of the CSI request information.

## Description

### Technical Field

The present disclosure relates to a sidelink communication technique, and more specifically, to a technique of reporting channel state information for sidelink communication.

### Background Art

A fifth-generation (5G) communication system (e.g., New Radio (NR) communication system) which uses a frequency band higher than a frequency band of a fourth-generation (4G) communication system (e.g., Long Term Evolution (LTE) communication system or LTE-Advanced (LTE-A) communication system) as well as the frequency band of the 4G communication system has been considered for processing of wireless data. The 5G communication system is capable of supporting Enhanced Mobile Broadband (eMBB) communications, Ultra-Reliable and Low-Latency communications (URLLC), massive Machine Type Communications (mMTC), and the like.

The 4G communication system and 5G communication system support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g., C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g., C-V2X communications) may be performed based on sidelink communication technologies (e.g., Proximity-based Services (ProSe) communication technology, Device-to-Device (D2D) communication technology, or the like). For example, sidelink channels for vehicles participating in V2V communications may be established, and communications between the vehicles may be performed using the sidelink channels. The sidelink communication may be performed using configured grant (CG) resources. The CG resources may be configured periodically, and periodic data (e.g., periodic sidelink data) may be transmitted using the CG resources.

Meanwhile, sidelink communication may be performed based on a broadcast scheme, a groupcast scheme, and/or a unicast scheme. In particular, channel state information between terminals may be required for the sidelink communication based on the unicast scheme.

### Summary

An objective of the present disclosure for solving the above-described problem is to provide a method and an apparatus for reporting channel state information for sidelink communication.

An operation method of a first terminal, according to a first exemplary embodiment of the present disclosure for achieving the objective, may include: transmitting information indicating a delay bound value of a sidelink (SL) channel state information (CSI) report to a second terminal; transmitting sidelink control information (SCI) including CSI request information to the second terminal; and performing a monitoring operation to receive the SL CSI of the second terminal within a time period corresponding to the delay bound value from a time of transmitting the CSI request information.

The operation method may further include, when the SL CSI of the second terminal is not received within the time period, retransmitting the CSI request information. When the CSI request information is retransmitted, a reset delay bound value may be used instead of the delay bound value, and the reset delay bound value may be greater than or less than the delay bound value.

The delay bound value may be set sidelink-specifically. The delay bound value may be set in units of slots. The delay bound value may be a time offset starting from the time of transmitting the CSI request information. The delay bound value may be set independently from a type of the SL CSI, and the type of the SL CSI may vary according to information included in the SL CSI. The SL CSI may include a channel quality indicator (CQI) and a rank indicator (RI). The SL CSI may be received on a physical sidelink shared channel (PSSCH).
An operation method of a second terminal, according to a second exemplary embodiment of the present disclosure for achieving the objective, may include: receiving, from a first terminal, a radio resource control (RRC) message including information indicating a delay bound value of a sidelink (SL) channel state information (CSI) report; receiving, from the first terminal, sidelink control information (SCI) including CSI request information; generating SL CSI by performing a measurement operation based on a reference signal received from the first terminal; and transmitting the SL CSI to the first terminal within a time period corresponding to the delay bound value from a time of receiving the CSI request information.

When the time period ends, the SL CSI may not be transmitted to the first terminal. The delay bound value may be set sidelink-specifically. The delay bound value may be set in units of slots, and may start from the time of receiving the CSI request information. The delay bound value may be set independently from a type of the SL CSI, and the type of the SL CSI may vary according to information included in the SL CSI. The SL CSI may include a channel quality indicator (CQI) and a rank indicator (RI).

A first terminal, according to a third exemplary embodiment of the present disclosure for achieving the objective, may include: a processor; and a memory configured to store at least one instruction executed by the processor. The at least one instruction is executed to: transmit information indicating a delay bound value of a sidelink (SL) channel state information (CSI) report to a second terminal; transmit sidelink control information (SCI) including CSI request information to the second terminal; and perform a monitoring operation to receive the SL CSI of the second terminal within a time period corresponding to the delay bound value from a time of transmitting the CSI request information.

The at least one instruction may be further executed to retransmit the CSI request information when the SL CSI of the second terminal is not received within the time period, and when the CSI request information is retransmitted, a reset delay bound value may be used instead of the delay bound value, and the reset delay bound value may be greater than or less than the delay bound value. The delay bound value may be set sidelink-specifically, and may be used for unicast sidelink communication. The delay bound value may be set in units of slots, and may start from the time of transmitting the CSI request information. The SL CSI may include a channel quality indicator (CQI) and a rank indicator (RI).

According to the exemplary embodiments of the present disclosure, a transmitting terminal may transmit information required for measuring sidelink (SL) channel state information (CSI) to a receiving terminal. The receiving terminal may measure SL CSI based on the information received from the transmitting terminal, and may transmit the SL CSI to the transmitting terminal. In particular, the SL CSI may be transmitted within a preconfigured period. The transmitting terminal may perform sidelink communication with the receiving terminal based on the SL CSI. Therefore, the performance of sidelink communication can be improved.

### Description of Drawings

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a UE performing sidelink communication.
FIG. 5 is a block diagram illustrating a first exemplary embodiment of a control plane protocol stack of a UE performing sidelink communication.
FIG. 6 is a block diagram illustrating a second exemplary embodiment of a control plane protocol stack of a UE performing sidelink communication.
FIG. 7 is a sequence chart illustrating a first exemplary embodiment of a method for reporting SL CSI.
FIG. 8 is a sequence chart illustrating a second exemplary embodiment of a method for reporting SL CSI.
FIG. 9 is a sequence chart illustrating a third exemplary embodiment of a method for reporting SL CSI.
FIG. 10 is a timing diagram illustrating a first exemplary embodiment of a transmission period of SL CSI.
FIG. 11 is a sequence chart illustrating a fourth exemplary embodiment of a method for reporting SL CSI.
FIG. 12 is a sequence chart illustrating a fifth exemplary embodiment of a method for reporting SL CSI.

### Detailed Description

While the present invention is susceptible to various modifications and alternative forms, specific embodiments are shown by way of example in the drawings and described in detail. It should be understood, however, that the description is not intended to limit the present invention to the specific embodiments, but, on the contrary, the present invention is to cover all modifications, equivalents, and alternatives that fall within the spirit and scope of the present invention.

Although the terms "first," "second," etc. may be used herein in reference to various elements, such elements should not be construed as limited by these terms. These terms are only used to distinguish one element from another. For example, a first element could be termed a second element, and a second element could be termed a first element, without departing from the scope of the present invention. The term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directed coupled" to another element, there are no intervening elements.

The terminology used herein is for the purpose of describing particular embodiments only and is not intended to be limiting of embodiments of the present invention. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof.

Unless otherwise defined, all terms (including technical and scientific terms) used herein have the same meaning as commonly understood by those of ordinary skill in the art to which the present invention pertains. It will be further understood that terms defined in commonly used dictionaries should be interpreted as having a meaning that is consistent with their meaning in the context of the related art and will not be interpreted in an idealized or overly formal sense unless expressly so defined herein.

Hereinafter, preferred exemplary embodiments of the present invention will be described in detail with reference to the accompanying drawings. In describing the present invention, to facilitate the entire understanding, like numbers refer to like elements throughout the description of the figures and the repetitive description thereof will be omitted.

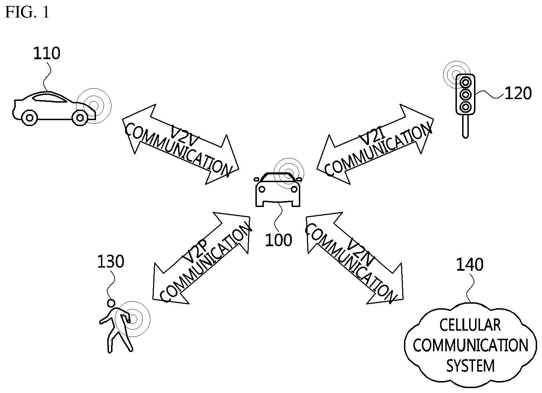

FIG. 1 is a conceptual diagram illustrating V2X communication scenarios. As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g., a cellular communication system 140), and the V2X communications supported by the cellular communication system 140 may be referred to as "Cellular-V2X (C-V2X) communications." Here, the cellular communication system 140 may include the 4G communication system (e.g., LTE communication system or LTE-A communication system), the 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported in the cellular communication system 140 may be performed based on "sidelink" communication technologies (e.g., ProSe and D2D communication technologies, and the like). In particular, the communications between the vehicles 100 and 110 may be performed using at least one sidelink channel established between the vehicles 100 and 110.

The V2I communications may include communications between the first vehicle 100 (e.g., the communication node located in the vehicle 100) and an infrastructure (e.g., road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 via the V2I communications. The V2I communications supported in the cellular communication system 140 may also be performed based on sidelink communication technologies (e.g., ProSe and D2D communication technologies, and the like). In particular, the communications between the vehicle 100 and the infrastructure 120 may be performed using at least one sidelink channel established between the vehicle 100 and the infrastructure 120.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 via the V2P communications. The communication node located within the vehicle 100 or the communication node carried by the person 130 may be configured to generate an alarm indicating a danger by determining a dangerous situation based on the obtained driving information and movement information. The V2P communications supported in the cellular communication system 140 may be performed based on sidelink communication technologies (e.g., ProSe and D2D communication technologies, and the like). In particular, the communications between the communication node located in the vehicle 100 and the communication node carried by the person 130 may be performed using at least one sidelink channel established between the communication nodes.

The V2N communications may be communications between the first vehicle 100 (e.g., the communication node located in the vehicle 100) and a server connected via the cellular communication system 140. The V2N communications may be performed based on the 4G communication technology (e.g., LTE or LTE-A) or the 5G communication technology (e.g., NR). Additionally, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

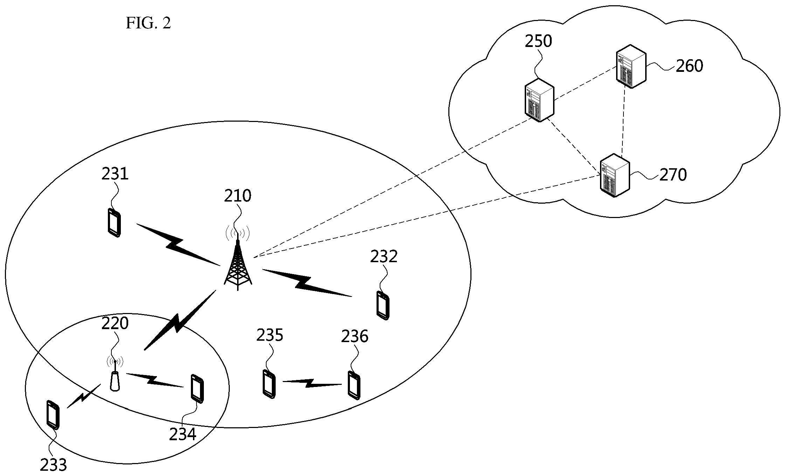

Meanwhile, the cellular communication system 140 supporting the V2X communications may be configured as follows. FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

Additionally, when the cellular communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported via the V2X network slice configured in the core network.

The communication nodes (e.g., base station, relay, UE, S-GW, P-GW, MME, UPF, SMF, AMF, etc.) comprising the cellular communication system may be configured to perform communications using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

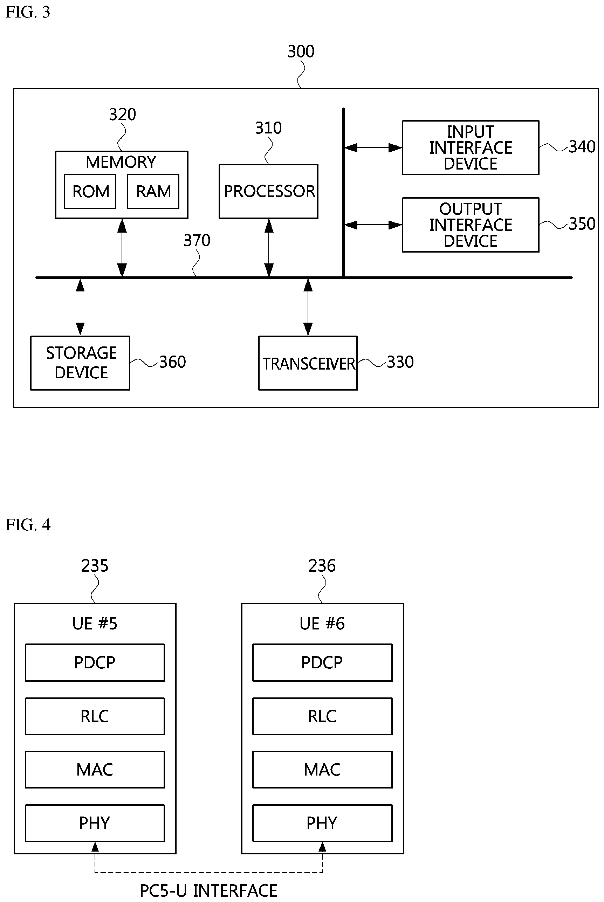

The communication nodes (e.g., base station, relay, UE, S-GW, P-GW, MME, UPF, SMF, AMF, etc.) comprising the cellular communication system may be configured as follows. FIG. 3 is a conceptual diagram illustrating an exemplary embodiment of a communication node constituting a cellular communication system.

As shown in FIG. 3, a communication node 300 may include at least one processor 310, a memory 320, and a transceiver 330 connected to a network for performing communications. Additionally, the communication node 300 may further include an input interface device 340, an output interface device 350, a storage device 360, and the like. Each component included in the communication node 300 may be configured to communicate with each other as connected via a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may be configured to execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a non-volatile storage medium. For example, the memory 320 may include at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may be configured to transmit signals received from the core network to the UEs 231 through 236 and the relay 220, and may be configured to transmit signals received from the UEs 231 through 236 and the relay 220 to the core network. The UEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may be configured to communicate with the base station 210 after being connected to the base station 210.

The relay 220 may be connected to the base station 210 and may be configured to relay communications between the base station 210 and the UEs 233 and 234. In other words, the relay 220 may be configured to transmit signals received from the base station 210 to the UEs 233 and 234, and transmit signals received from the UEs 233 and 234 to the base station 210. The UE 234 may belong to both of the cell coverage of the base station 210 and the cell coverage of the relay 220, and the UE 233 may belong to the cell coverage of the relay 220. In other words, the UE 233 may be located outside the cell coverage of the base station 210. The UEs 233 and 234 may be connected to the relay 220 by performing a connection establishment procedure with the relay 220. The UEs 233 and 234 may be configured to communicate with the relay 220 after being connected to the relay 220.

The base station 210 and the relay 220 may support multiple-input, multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may be configured to perform operations corresponding to the base station 210 and operations supported by the base station 210. The UEs 233 and 234 may be configured to perform operations corresponding to the relays 220 and operations supported by the relays 220.

Particularly, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**Table 1**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows. FIG. 4 is a block diagram illustrating an exemplary embodiment of a user plane protocol stack of a UE performing sidelink communication.

As shown in FIG. 4, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may include a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications (e.g., V2X service). Additionally, in the sidelink communications, a hybrid automatic repeat request (HARQ) feedback operation may be supported, and an RLC acknowledged mode (RLC AM) or an RLC unacknowledged mode (RLC UM) may be supported.

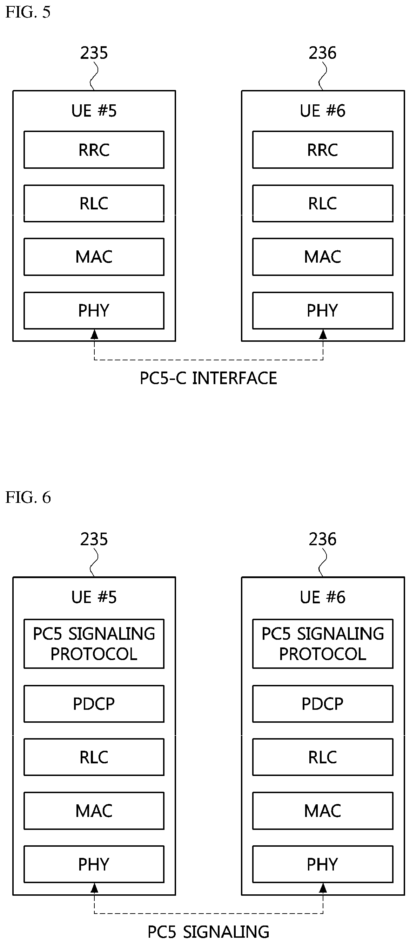

Meanwhile, a control plane protocol stack of the UEs (e.g., the UEs 235 and 236) performing sidelink communications may be configured as follows. FIG. 5 is a block diagram illustrating a first exemplary embodiment of a control plane protocol stack of a UE performing sidelink communication, and FIG. 6 is a block diagram illustrating a second exemplary embodiment of a control plane protocol stack of a UE performing sidelink communication.

As shown in FIGS. 5 and 6, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g., Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by a higher layer signaling. The PSCCH may be used for transmitting and receiving sidelink control information (SCI) and may also be configured in the UE (e.g., UE 235 or 236) by a higher layer signaling.

The PSDCH may be used for a discovery procedure. For example, a discovery signal may be transmitted over the PSDCH. The PSBCH may be used for transmitting and receiving broadcast information (e.g., system information). Additionally, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**Table 2**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may be configured to perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In particular, the sidelink control information may be transmitted via resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In particular, the sidelink control information may be transmitted via resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In particular, the sidelink data may be transmitted and received via resources scheduled by the base station 210. When the sidelink TM 4 is supported, the resource pool for transmitting and receiving sidelink data may be configured by a dedicated RRC signaling procedure or a broadcast RRC signaling procedure. Particularly, the sidelink data may be transmitted and received via resources selected autonomously by the UE (e.g., UE 235 or 236) within the resource pool configured by the dedicated RRC signaling procedure or the broadcast RRC signaling procedure.

Hereinafter, methods for retransmitting sidelink data will be described. In the exemplary embodiments, an HARQ response may be referred to as 'HARQ-acknowledgement (HARQ-ACK)'. The HARQ response may be ACK or negative ACK (NACK). Even when a method (e.g., transmission or reception of a signal) to be performed at a first communication node among communication nodes is described, a corresponding second communication node may perform a method (e.g., reception or transmission of the signal) corresponding to the method performed at the first communication node. In other words, when an operation of a UE #1 (e.g., vehicle #1) is described, a UE #2 (e.g., vehicle #2) corresponding thereto may be configured to perform an operation corresponding to the operation of the UE #1. Conversely, when an operation of the UE #2 is described, the corresponding UE #1 may be configured to perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for the higher layer signaling may be referred to as a 'higher layer message' or a 'higher layer signaling message'. A message used for the MAC signaling may be referred to as a 'MAC message' or a 'MAC signaling message'. A message used for the PHY signaling may be referred to as a 'PHY message' or a 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single SCI scheme or a multi SCI scheme. When the single SCI scheme is used, data transmission (e.g., sidelink data transmission, sidelink-shared channel (SL-SCH) transmission) may be performed based on a single SCI (e.g., 1st-stage SCI). When the multi SCI scheme is used, data transmission may be performed using two SCIs (e.g., 1st-stage SCI and 2nd-stage SCI). The SCI may be transmitted through a PSCCH and/or a PSSCH. When the single SCI scheme is used, the SCI (e.g., 1st-stage SCI) may be transmitted via a PSCCH. When the multi SCI scheme is used, the 1st-stage SCI may be transmitted via a PSCCH, and the 2nd-stage SCI may be transmitted via a PSCCH or a PSSCH. The 1st-stage SCI may be referred to as a 'first stage SCI', and the 2nd-stage SCI may be referred to as a 'second stage SCI'.

The 1st-stage SCI may include one or more information elements among priority information, frequency resource assignment information, time resource assignment information, resource reservation period information, DMRS pattern information, 2nd-stage SCI format information, beta_offset indicator, number of DMRS ports, and modulation and coding scheme (MCS) information. The 2nd-stage SCI may include one or more information elements among a HARQ process identifier (ID), redundancy version (RV), source ID, destination ID, CSI request information, zone ID, and communication range requirement.

Meanwhile, channel state information (CSI) between terminals may be required for sidelink communication. In other words, sidelink communication may be performed based on CSI. The CSI may include one or more of a channel quality indicator (CQI), a rank indicator (RI), and a precoding matrix indicator (PMI). In addition, the CSI may further include a reference signal received power (RSRP), a reference signal received quality (RSRQ), and/or a received signal strength indicator (RSSI). In the following exemplary embodiments, a method for triggering an SL CSI report, a method for triggering SL CSI measurement, a method for configuring SL CSI measurement, a method for configuring an SL CSI report, and the like will be described. The SL CSI may mean CSI for sidelink communication. In the following exemplary embodiments, the CSI may mean the SL CSI.

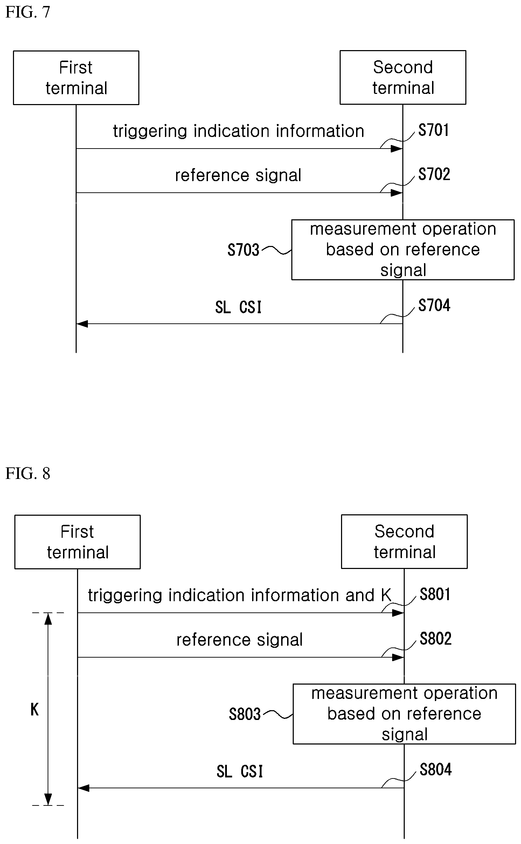

FIG. 7 is a sequence chart illustrating a first exemplary embodiment of a method for reporting SL CSI. Referring to FIG. 7, a communication system may include a first terminal and a second terminal. Sidelink communication may be performed between the first terminal and the second terminal. The first terminal may be the UE #5 235 shown in FIG. 2, and the second terminal may be the UE #6 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

The first terminal may be configured to generate information indicating triggering of an SL CSI report. The triggering of an SL CSI report may be implicitly or explicitly indicated. In exemplary embodiments, 'information indicating triggering of an SL CSI report' may be referred to as 'triggering indication information'. The triggering indication information may indicate whether to trigger an SL CSI report. The triggering indication information may be included in at least one of a 1st-stage SCI and/or a 2nd-stage SCI. For example, CSI request information included in a 2nd-stage SCI may be used as the triggering indication information. The first terminal may be configured to transmit the triggering indication information (e.g., SCI including the triggering indication information) to the second terminal (S701). The second terminal may be configured to receive the SCI from the first terminal, and identify the triggering indication information included in the SCI. The second terminal may be configured to determine that the SL CSI report is triggered based on the triggering indication information.

The first terminal may be configured to transmit a reference signal (e.g., SL CSI-RS) (S702). The SL CSI-RS may be a CSI-RS for sidelink communication. The reference signal may be transmitted using resources configured by a base station (e.g., base station to which the first terminal is connected). When the SL CSI report is triggered, the second terminal may be configured to perform a measurement operation based on the reference signal received from the first terminal (S703). The second terminal may be configured to generate SL CSI based on a result of the measurement operation. The SL CSI may include one or more of CQI, RI, and PMI. The SL CSI may be instantaneous channel state information and/or accumulated channel state information (e.g., statistical channel state information, average channel state information). The SL CSI may be wideband channel state information.

The second terminal may be configured to transmit the SL CSI to the first terminal (S704). For example, the second terminal may be configured to perform a sensing operation on sidelink resources, and when a sidelink resource is determined to be in an idle state by the sensing operation, the second terminal may be configured to transmit the SL CSI using the sidelink resource. The SL CSI may be transmitted on a sidelink channel (e.g., PSSCH, PSCCH, PSFCH). For example, a MAC control element (CE) including the SL CSI may be transmitted on a sidelink channel. When the MAC CE including the SL CSI is transmitted on a PSSCH, the SL CSI may be multiplexed with sidelink data in the PSSCH. The first terminal may be configured to receive the SL CSI from the second terminal, and perform sidelink communication (e.g., sidelink communication based on a unicast scheme) based on the SL CSI.

A time of transmitting the SL CSI (e.g., a delay bound value of the SL SCI report) may be set based on at least one of system information, RRC signaling, MAC signaling, and PHY signaling. The time of transmitting the SL CSI may be referred to as *'sl-*LatencyBound-CSI-Report'. The time of transmitting the SL CSI may be set by the base station and/or the first terminal. For example, the first terminal (i.e., transmitting terminal) may be configured to transmit an RRC message (e.g., RRC reconfiguration sidelink message) including information indicating the time of transmitting the SL CSI (e.g., *sl*-LatencyBound-CSI-Report) to the second terminal. The information indicating the time of transmitting the SL CSI may be used for unicast-based sidelink communication between the first terminal and the second terminal. The time of transmitting the SL CSI may be set to a fixed value in the communication system.

The time of transmitting the SL CSI may be set resource pool-specifically, SL-specifically (e.g., link-specifically), or terminal-specifically (e.g., UE-specifically). The time of transmitting the SL CSI may be set in units of slots, and may indicate a latency bound from the time of receiving the triggering indication information (e.g., a slot in which the 2nd-stage SCI is received). In other words, the time of transmitting the SL CSI may be indicated by a slot offset from the time of receiving the 2nd-stage SCI including the triggering indication information (e.g., CSI request information). Alternatively, the time of transmitting the SL CSI may be indicated by a slot offset from the time of receiving the 1st-stage SCI associated with the 2nd-stage SCI including the triggering indication information (e.g., CSI request information). The time of transmitting the SL CSI may be set to one of 3 to 160.

In the exemplary embodiments, the time of receiving (or, the time of transmitting) the triggering indication information may be referred to as 'N', and the time of transmitting (or, the time of receiving) the SL CSI may be referred to as 'K'. In other words, K may be a delay bound value of the SL CSI report. N may indicate a specific symbol, a specific mini-slot, a specific slot, or a specific subframe within a time period for triggering of the SL CSI report. K may be a time offset. Each of N and K may be set in units of symbol(s), mini-slot(s), slot(s), or subframe(s). Each of N and K may be an integer greater than or equal to 0. The time unit for N may be the same as the time unit for K. Alternatively, the time unit for N may be different from the time unit for K.

When the time unit for N is the same as the time unit for K, the time of transmitting the SL CSI may be an (N+K)-th slot after K slot(s) from an N-th slot. In particular, the SL CSI may be transmitted in the (N+K)-th slot. When the time unit is a subframe, the time of transmitting the SL CSI may be an (N+K)-th subframe after K subframe(s) from an N-th subframe. The time of transmitting the SL CSI may be set based on a time unit other than the time units described above. Even when exemplary embodiments are described on the basis of slots, the exemplary embodiments may be applied to other time units (e.g., symbols, mini-slots, subframes).

In the communication system, K (e.g., time offset, slot offset) may be set to a fixed value, and the SL CSI reporting may be configured to be performed before the (N+K)-th slot. The base station may be configured to set K and transmit system information (e.g., MIB, SIB) including K. Alternatively, the first terminal (e.g., transmitting terminal) may be configured to set K, and transmit a message (e.g., RRC message) including K. In particular, K may be fixed to one value. When the SL CSI is not received in the (N+K)-th slot, the first terminal (e.g., transmitting terminal) may be configured to determine that the triggering indication information has not been applied to the second terminal (e.g., receiving terminal). Alternatively, the first terminal may be configured to determine that the second terminal has failed to reserve (e.g., secure) a resource for the SL CSI report. In particular, the first terminal may be configured to retransmit the triggering indication information to the second terminal to request an SL CSI report.

Further, K (e.g., the time of transmitting the SL CSI) may be set by RRC signaling and/or MAC signaling (e.g., MAC CE). In addition, K may be set resource pool-specifically, SL-specifically (e.g., link-specifically), or terminal-specifically. When K is set resource pool-specifically, K may be included in configuration information of a resource pool, and the configuration information of the resource pool may be transmitted by RRC signaling and/or MAC signaling. In particular, identical K may be used within the corresponding resource pool. When K is set SL-specifically, K may be included in configuration information of a sidelink, and the configuration information of the sidelink may be transmitted by RRC signaling and/or MAC signaling. Particularly, identical K may be used in the corresponding sidelink. When K is set terminal-specifically, K may be included in dedicated configuration information, and the dedicated configuration information may be transmitted by RRC signaling and/or MAC signaling. In this case, K may be independently set for each of terminals.

Additionally, K set by RRC signaling and/or MAC signaling may be semi-static information. Therefore, K may be changeable. For example, K may be changed by a combination of 'RRC signaling and/or MAC signaling' and PHY signaling (e.g., SCI). Alternatively, K may be changed using only PHY signaling. In other words, K may be changed dynamically.

**Table 3**

| **Information bits** | **K** |
|---|---|
| 00 | 4 |
| 01 | 6 |
| 10 | 8 |
| 11 | 12 |

The information bits according to K defined in Table 3 may be set by higher layer signaling and/or system information. Four values of K may be indicated using two information bits. K may be transmitted together with the triggering indication information.

FIG. 8 is a sequence chart illustrating a second exemplary embodiment of a method for reporting SL CSI. Referring to FIG. 8, a communication system may include a first terminal and a second terminal. Sidelink communication may be performed between the first terminal and the second terminal. The first terminal may be the UE #5 235 shown in FIG. 2, and the second terminal may be the UE #6 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

The first terminal may be configured to transmit feedback indication information and K to the second terminal (S801). The feedback indication information and K may be included in SCI (e.g., 1st-stage SCI and/or 2nd-stage SCI). In another exemplary embodiment, K may be included in an RRC message transmitted from the first terminal, and the feedback indication information may be included in SCI transmitted from the first terminal. Alternatively, the feedback indication information and K may be transmitted by the base station instead of the first terminal. For example, the base station may be configured to transmit an RRC message including the feedback indication information and K. In particular, the feedback indication information may be '*sl-*CSI-Acquisition', and K may be '*sl*-LatencyBound-CSI-Report'.

The second terminal may be configured to receive the feedback indication information and K from the first terminal or the base station. The second terminal may be configured to determine that the SL CSI report is triggered based on the feedback indication information. K may start from the time of receiving the feedback indication information. Accordingly, the second terminal may be configured to start a timer corresponding to K from the time of receiving the feedback indication information.

The first terminal may be configured to transmit a reference signal (e.g., SL CSI-RS) (S802). The SL CSI-RS may be a CSI-RS for sidelink communication. The reference signal may be transmitted using resources configured by a base station (e.g., base station to which the first terminal is connected). When an SL CSI report is triggered, the second terminal may be configured to perform a measurement operation based on the reference signal received from the first terminal (S803). The second terminal may be configured to generate SL CSI based on a result of the measurement operation. The SL CSI may include one or more of CQI, RI, and PMI.

When the timer corresponding to K does not expire, the second terminal may be configured to transmit the SL CSI to the first terminal (S804). In other words, the SL CSI may be transmitted within K from the time of receiving the triggering indication information. On the other hand, when the timer corresponding to K expires, the second terminal may not transmit the SL CSI. In other words, the SL CSI may not be transmitted after K from the time of receiving the triggering indication information. The SL CSI may be transmitted on a sidelink channel (e.g., PSSCH, PSCCH, PSFCH). The first terminal may be configured to receive the SL CSI from the second terminal, and may perform sidelink communication (e.g., sidelink communication based on a unicast scheme) based on the SL CSI.

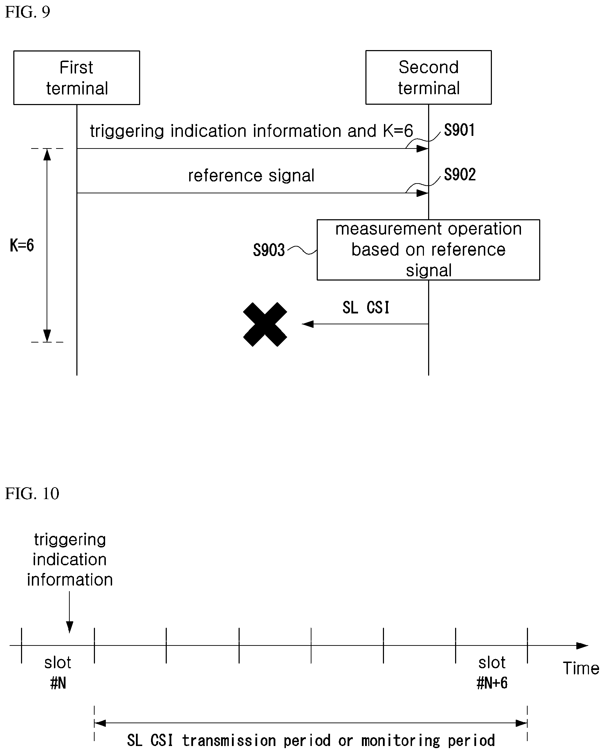

FIG. 9 is a sequence chart illustrating a third exemplary embodiment of a method for reporting SL CSI. Referring to FIG. 9, a communication system may include a first terminal and a second terminal. Sidelink communication may be performed between the first terminal and the second terminal. The first terminal may be the UE #5 235 shown in FIG. 2, and the second terminal may be the UE #6 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

A step S901 may be performed identically or similarly to the step S801 shown in FIG. 8, a step S902 may be performed identically or similarly to the step S802 shown in FIG. 8, and a step S903 may be performed identically or similarly to the step S803 shown in FIG. 8. Here, K may be set to 6. In particular, a transmission period of the SL CSI (e.g., monitoring period of the SL CSI) may be configured as follows.

FIG. 10 is a timing diagram illustrating a first exemplary embodiment of a transmission period of SL CSI. Referring to FIG. 10, a slot in which triggering indication information (e.g., triggering indication information and K) is received may be a slot #N, and K may be set to 6. In this case, a transmission period of SL CSI (e.g., a monitoring period of SL CSI) may be from an end point of the slot #N to an end point of a slot #(N+6). The second terminal may be configured to transmit SL CSI to the first terminal in the transmission period of SL CSI. The first terminal may be configured to perform a monitoring operation in the monitoring period of SL CSI to receive the SL CSI. When the SL CSI is transmitted on a PSCCH, the first terminal may be configured to perform a monitoring operation on the PSCCH in the monitoring period of SL CSI. When the SL CSI is transmitted on a PSSCH, the first terminal may be configured to perform a monitoring operation on the PSSCH in the monitoring period of SL CSI.

Referring to FIGS. 9 and 10, the second terminal may not be able to transmit SL CSI to the first terminal within the transmission period of SL CSI. When the transmission period of SL CSI ends (e.g., when the timer corresponding to K expires), the second terminal may be configured to stop the sensing operation on sidelink resources for the SL CSI reporting. In other words, the second terminal may be configured to stop the transmission operation of SL CSI. When the SL CSI is not received within the monitoring period of SL CSI, the first terminal may be configured to stop the monitoring operation for obtaining the SL CSI. The monitoring operation may be stopped after the slot #(N+6).

Meanwhile, the PSCCH including SL CSI may be identified by various schemes. For example, a cyclic redundancy check (CRC) masking value or a scrambling sequence (e.g., scrambling identifier (ID), sequence ID) for the PSCCH including SL CSI may be configured. In particular, the second terminal may be configured to transmit the PSCCH including the SL CSI using the CRC masking value or the scrambling sequence. The CRC masking value for the PSCCH including the SL CSI may be the same as a CRC masking value for the PSCCH including the triggering indication information triggering the corresponding SL CSI report. The scrambling sequence for the PSCCH including the SL CSI may be the same as a scrambling sequence for the PSCCH including the triggering indication information triggering the corresponding SL CSI report. The scrambling ID (e.g., sequence ID) may be an ID set for the SL CSI reporting. The scrambling ID may be set resource pool-specifically, SL-specifically, or terminal-specifically.

In the exemplary embodiment shown in FIG. 10, the second terminal may be configured to stop the sensing operation on sidelink resources for the SL CSI reporting from the slot #(N+7). That is, the operation for reporting the SL CSI may be stopped. Even when a sidelink resource after the slot #(N+6) is available (e.g., reservable), the operation for reporting the SL CSI may be stopped.

When the SL CSI is not received from the second terminal, the first terminal may be configured to retransmit the triggering indication information as needed. When K is indicated by PHY signaling (e.g., SCI), the first terminal may be configured to reset K and transmit SCI including the reset K. The reset K may be a value greater or less than the previous K. The second terminal may be configured to identify the reset K by receiving the SCI, and start a timer corresponding to the reset K.

When the first terminal not receiving the SL CSI retransmits the triggering indication information, information (hereinafter, referred to as 'retransmission indicator') indicating retransmission of the triggering indication information may also be transmitted. The retransmission indicator may indicate whether the triggering indication information is initial triggering indication information or retransmitted triggering indication information. In particular, a value(s) of the SL CSI reported to the first terminal may vary based on whether the triggering indication information is retransmitted. When the retransmission indicator indicates retransmitted triggering indication information, the second terminal may be configured to transmit the previous SL CSI (e.g., the SL CSI has failed to transmit) to the first terminal. When the triggering indication information indicates initial triggering indication information, the second terminal may be configured to transmit current SL CSI to the first terminal.

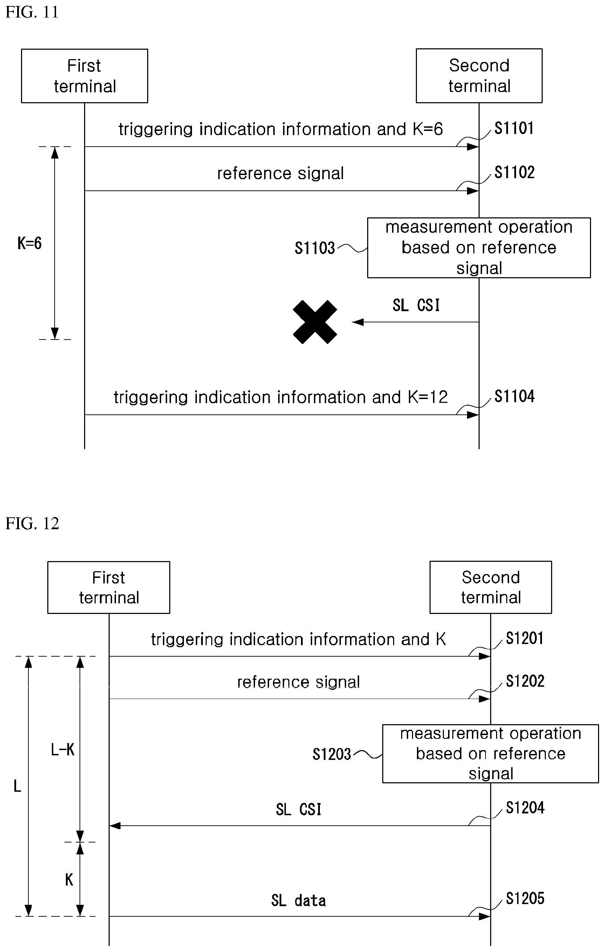

Meanwhile, the time (e.g., K) of transmitting the SL CSI may be reset. A method of resetting the time of transmitting the SL CSI may be as follows. FIG. 11 is a sequence chart illustrating a fourth exemplary embodiment of a method for reporting SL CSI.

Referring to FIG. 11, a communication system may include a first terminal and a second terminal. Sidelink communication may be performed between the first terminal and the second terminal. The first terminal may be the UE #5 235 shown in FIG. 2, and the second terminal may be the UE #6 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

A step S1101 may be performed identically or similarly to the step S901 shown in FIG. 9, a step S1102 may be performed identically or similarly to the step S902 shown in FIG. 9, and a step S1103 may be performed identically or similarly to the step S903 shown in FIG. 9. In the step S1101, SCI including triggering indication information may be received in a slot #N. K may be set to 6. K may be set by RRC signaling (e.g., PC5 RRC signaling). The second terminal may not be able to transmit SL CSI to the first terminal before or in a slot #(N+6), and the first terminal may not receive SL CSI from the second terminal before or in the slot #(N+6).

Particularly, the first terminal may reset K. For example, the first terminal may set K to 12. The first terminal may be configured to transmit triggering indication information and the reset K (e.g., 12) to the second terminal (S1104). The reset K may be transmitted by a MAC message and/or a PHY message. The information indicating the reset K transmitted in the step S1104 may be configured based on Table 3. For example, the information indicating the reset K may be '11'. In addition, a retransmission indicator may also be transmitted to the second terminal in the step S1104. The retransmission indicator may indicate that the triggering indication information is retransmitted triggering indication information. The second terminal may be configured to receive the triggering indication information, the reset K, and the retransmission indicator from the first terminal. The second terminal may be configured to determine that the triggering indication information is retransmitted triggering indication information based on the retransmission indicator, and perform a measurement operation on a reference signal according to the triggering indication information. In addition, the second terminal may be configured to start a timer corresponding to the reset K from the time of receiving the triggering indication information, and transmit SL CSI as a result of the measurement operation to the first terminal before the timer expires.

Additionally, K may be increased or decreased at a preconfigured rate for each retransmission of the triggering indication information. For example, if the initial K is 6, K may increase by 2 for each retransmission of the triggering indication information. Alternatively, K may increase by 2 times for each retransmission of the triggering indication information. In addition, a maximum value of K may be set, and K may be set not to exceed the maximum value. Each of the increase amount, decrease amount, increase rate, decrease rate, and maximum value of K may be set by at least one of system information, an RRC message (e.g., PC5 RRC message), a MAC message, and a PHY message. Each of the increase amount, decrease amount, increase rate, decrease rate, and maximum value of K may be set resource pool-specifically, sidelink-specifically, or terminal-specifically. The maximum number of retransmissions of the triggering indication information may be set, and the maximum number of retransmissions may be set by at least one of system information, an RRC message (e.g., PC5 RRC message), a MAC message, and a PHY message.

Based on the type of SL CSI, a method of setting K and/or a method of resetting (e.g., method of changing) K may vary. Referring to Tables 4 and 5 below, the increase amount or decrease amount of K may vary according to the type of SL CSI (e.g., instantaneous channel state information, average channel state information, filtered channel state information).

**Table 4**

| | **K in the first transmission (i.e., initial transmission) of triggering indication information** | **K in the second transmission (i.e., first retransmission) of triggering indication information** | **K in the third transmission (i.e., second retransmission) of triggering indication information** |
|---|---|---|---|
| Instantaneous channel state information | 4 | 2 | 1 |
| average channel state information (e.g., filtered channel state information) | 4 | 8 | 16 |

**Table 5**

| | **K in the first transmission (i.e., initial transmission) of triggering indication information** | **K in the second transmission (i.e., first retransmission) of triggering indication information** | **K in the third transmission (i.e., second retransmission) of triggering indication information** |
|---|---|---|---|
| Instantaneous channel state information | 2 | 2 | 2 |
| average channel state information (e.g., filtered channel state information) | 2 | 4 | 6 |

The averaged/filtered channel state information may be channel state information for a longer time period than the instantaneous channel state information. In Table 4, K for the average/filtered channel state information may be set to be equal to or greater than K for the instantaneous channel state information. K for the averaged/filtered channel state information may be increased by 2 times for each retransmission of the triggering indication information. K for the instantaneous channel state information may be reduced by half for each retransmission of the triggering indication information.

In Table 5, K for the average/filtered channel state information may be increased by 2 for each retransmission of the triggering indication information, and K for the instantaneous channel state information may be maintained at the same value even when the triggering indication information is retransmitted. The type of SL CSI may be set by at least one of system information, an RRC message, a MAC message, and a PHY message. For example, the type of SL SCI may be set by the base station or the first terminal. Each of the first terminal and the second terminal may reset K based on a resetting method according to the type of SL CSI.

Table 4 or Table 5 may be configured by higher layer signaling, and each of the first terminal and the second terminal may be configured to determine K according to the type of SL CSI and the number of retransmissions of the triggering indication information based on Table 4 or Table 5. In another exemplary embodiment, the increase/decrease amount or increase/decrease rate according to the type of SL CSI may be set by higher layer signaling, and each of the first and second terminals may be configured to determine K based on the type of SL CSI and the number of retransmissions of the triggering indication information.

The type of SL CSI may not be limited to the instantaneous channel state information, the average channel state information, and the filtered channel state information. For example, the type of SL CSI may vary according to CQI, RI, and/or PMI. A first type of SL CSI may include CQI and RI, and a second type of SL CSI may include PMI.

Further, K may be transmitted together with the triggering indication information. In other words, K may be transmitted every time in the step of transmitting the triggering indication information. In particular, the second terminal may be configured to update the timer according to the received K. When K is reset according to the preconfigured increase/decrease amount or increase/decrease rate, a situation in which the second terminal transmits SL CSI to the first terminal, but the first terminal does not receive the SL CSI may occur. This problem may occur when K recognized by the first terminal is different from K recognized by the second terminal. To prevent this problem, when K is reset according to the preconfigured increase/decrease amount or increase/decrease rate for each transmission of the triggering indication information, information indicating whether the corresponding triggering indication information is retransmitted triggering indication information (e.g., retransmission indicator) may be indicated explicitly or implicitly by SCI.

If the second terminal transmits SL CSI to the first terminal, but the first terminal does not receive the SL CSI, the first terminal may be configured to transmit triggering indication information for retransmission of the SL CSI to the second terminal. The second terminal transmitting the SL CSI may be configured to identify the triggering indication information received from the first terminal as new triggering indication information (e.g., initial triggering indication information). In particular, K applied to the first terminal may be different from K applied to the second terminal. When the first terminal informs the second terminal of K together with the triggering indication information, the second terminal may be configured to identify whether the current triggering indication information is initial triggering indication information or retransmitted triggering indication information based on K. In addition, the second terminal may be configured to determine the number of times the current triggering indication information has been retransmitted, based on K. The above-described scheme may be interpreted as a scheme in which a retransmission indicator is transmitted together with triggering indication information.

Instead of K, a toggle bit may be used to indicate whether the triggering indication information is initial triggering indication information or retransmitted triggering indication information. To indicate whether the triggering indication information is initial triggering indication information or retransmitted triggering indication information, a specific field (e.g., a field included in SCI) may be reused, or a new field may be used.

When a plurality of SL CSIs exist in the second terminal, the information indicating whether the triggering indication information included in the SCI is retransmitted may be used to indicate one or more SL CSIs among the plurality of SL CSIs. The plurality of SL CSIs may be divided based on times at which the respective SL CSIs are measured.

**Table 6**

| **Triggering indication information** | **Description** |
|---|---|
| 00 | SL CSI report is not triggered |
| 01 | SL CSI report is triggered |
| 10 | First retransmission of triggering indication information |
| 11 | Second retransmission of triggering indication information |

Referring to Table 6, the triggering indication information included in the SCI (e.g., 1st-stage SCI or 2nd-stage SCI) may be configured as 2 bits. The triggering indication information set to '01' may indicate initial triggering indication information. The second terminal may be configured to identify the number of retransmissions of the triggering indication information based on the triggering indication information included in the SCI. Alternatively, the field included in the SCI may be reused to indicate the content defined in Table 6. The field included in SCI may implicitly indicate the content defined in Table 6.

When K is sufficiently increased, a probability of failure of the SL CSI report due to a failure in sensing of a sidelink resource in the second terminal (e.g., receiving terminal) may decrease. When K has a small value, the monitoring period of SL CSI (e.g., a monitoring period of a PSCCH or PSSCH including SL CSI) in the first terminal (e.g., transmitting terminal) may be reduced, and the reporting procedure of the SL CSI may be completed quickly.

The first terminal may be configured to identify states of sidelink resources capable of transmitting the SL CSI based on a channel busy ratio (CBR) for the sidelink, and may be configured to increase or decrease K based on the identified result. In response to determining that the number of terminals using and/or terminals desiring to use resources belonging to the resource pool is small based on the CBR, the first terminal may be configured to determine that increasing K is meaningless. Particularly, the first terminal may be configured to maintain or decrease K, and transmit the same K (or decreased K) together with the triggering indication information.

In response to determining that the number of terminals using and/or terminals desiring to use resources belonging to the resource pool is large based on the CBR, the first terminal may increase K. In other words, the first terminal may be configured to transmit the increased K together with the triggering indication information. In particular, the probability of failure of the SL CSI report due to the failure of sensing of sidelink resources may be reduced. In the above-described operation, in addition to the CBR, a combination of parameters related to a channel state (e.g., channel situation) may be used.

In the step of retransmitting the triggering indication information based on a specific threshold value for the used parameters, the increased K or decreased K may be transmitted. In order to reset K, a condition with respect to the threshold value for the parameters used by the first terminal may be configured. For example, an increase or decrease amount of K may be set for each of the case where the parameter is greater than or equal to the threshold value and the case where the parameter is less than the threshold value. Alternatively, an increase or decrease rate of K may be set for each of the case where the parameter is greater than or equal to the threshold value and the case where the parameter is less than the threshold value.

When one or more parameters are used, the increase/decrease amount and/or the increase/decrease rate of K may be determined based on the threshold value of each of the one or more parameters. In particular, the threshold value may be set by one or more of system information, RRC signaling, MAC signaling, and PHY signaling. The threshold value may be set resource pool-specifically, sidelink-specifically, or terminal-specifically.

Meanwhile, in the exemplary embodiments shown in FIGS. 8, 9, and 11, the time offset (e.g., slot offset) may start from the time of receiving (or, the time of transmitting) the triggering indication information. Alternatively, the time offset may start from a sidelink resource configured for data transmission.

FIG. 12 is a sequence chart illustrating a fifth exemplary embodiment of a method for reporting SL CSI. Referring to FIG. 12, a communication system may include a first terminal and a second terminal. Sidelink communication may be performed between the first terminal and the second terminal. The first terminal may be the UE #5 235 shown in FIG. 2, and the second terminal may be the UE #6 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

The first terminal may be configured to transmit SCI (e.g., 2nd-stage SCI) including triggering indication information (e.g., CSI request information) to the second terminal (S1201). In the step S1201, K (e.g., information on a time of transmitting SL CSI) may be transmitted together with the triggering indication information. Additionally, K may be transmitted by an RRC message (e.g., PC5 RRC message), and the triggering indication information may be transmitted by SCI. Alternatively, K may be set by the base station. The second terminal may be configured to receive the triggering indication information and/or K from the first terminal. Alternatively, the second terminal may be configured to receive K from the base station.

The first terminal may be configured to transmit a reference signal (SI202). The reference signal may be transmitted via a sidelink resource configured by the base station. When an SL CSI report is triggered, the second terminal may be configured to perform a measurement operation based on the reference signal received from the first terminal (S1203). The second terminal may be configured to generate SL CSI as a result of the measurement operation. When the triggering indication information is received in a slot #N, the second terminal may be configured to transmit the SL CSI to the first terminal in a slot #(N+L-K) (S1204). The SL CSI may be transmitted on a PSCCH, a PSSCH, and/or a PSFCH. In particular, L may indicate a time period from the time of receiving the triggering indication information to a sidelink resource scheduled by SCI associated with the triggering indication information (or SCI not associated with the corresponding triggering indication information). L may be set in units of symbols, mini-slots, slots, or subframes. Additionally, L may be an integer greater than or equal to 0.

The first terminal may be configured to perform a monitoring operation in the time period from the slot #N to the slot #(N+L-K) in order to receive the SL CSI. When the SL CSI is received in the slot #(N+L-K), the first terminal may be configured to determine the received SL CSI as valid SL CSI. On the other hand, when the SL CSI is received after the slot #(N+L-K), the first terminal may be configured to determine the received SL CSI as invalid SL CSI. In this case, the first terminal may discard the SL CSI.

The first terminal may be configured to transmit SL data to the second terminal in a sidelink resource scheduled by SCI (S1205). The second terminal may be configured to receive the SL data from the first terminal by performing a monitoring operation on the sidelink resource scheduled by SCI. The above-described operation may also be applied when SL data for a terminal other than the second terminal receiving the triggering indication information exists in the first terminal.

In another exemplary embodiment, K may start from the sidelink resource scheduled by the SCI. In particular, the second terminal may be configured to transmit SL CSI to the first terminal in the slot #(N+L+K). The first terminal may be configured to perform a monitoring operation in a time interval from the slot #N to the slot #(N+L+K) to obtain the SL CSI.

The time of transmitting the SL CSI (e.g., delay bound value of the SL CSI report) may be set based on a processing time for the SL CSI and/or a processing time for SL data transmission in the first terminal. The time of transmitting the SL CSI may be a fixed value in the communication system. The time of transmitting the SL CSI may be set by one or more of system information, RRC signaling, MAC signaling, and PHY signaling. The time of transmitting the SL CSI may be resource pool-specifically, sidelink-specifically, or terminal-specifically. The exemplary embodiment shown in FIGS. 8, 9, and/or 11 may be applied to the exemplary embodiment shown in FIG. 12.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. An operation method of a first terminal in a communication system, the operation method comprising:
transmitting, by a processor, information indicating a delay bound value of a sidelink (SL) channel state information (CSI) report to a second terminal;
transmitting, by the processor, sidelink control information (SCI) including CSI request information to the second terminal; and
performing a monitoring operation to receive the SL CSI of the second terminal within a time period corresponding to the delay bound value from a time of transmitting the CSI request information.

2. . The operation method according to claim 1, further comprising, when the SL CSI of the second terminal is not received within the time period, retransmitting the CSI request information.

3. . The operation method according to claim 2, wherein in response to the CSI request information being retransmitted, a reset delay bound value is used instead of the delay bound value, and the reset delay bound value is greater than or less than the delay bound value.

4. . The operation method according to claim 1, wherein the delay bound value is set sidelink-specifically.

5. . The operation method according to claim 1, wherein the delay bound value is set in units of slots.

6. . The operation method according to claim 1, wherein the delay bound value is a time offset starting from the time of transmitting the CSI request information.

7. . The operation method according to claim 1, wherein the delay bound value is set independently from a type of the SL CSI, and the type of the SL CSI varies according to information included in the SL CSI.

8. . The operation method according to claim 1, wherein the SL CSI includes a channel quality indicator (CQI) and a rank indicator (RI).

9. . The operation method according to claim 1, wherein the SL CSI is received on a physical sidelink shared channel (PSSCH).

10. . An operation method of a second terminal in a communication system, the operation method comprising:
receiving, from a first terminal, a radio resource control (RRC) message including information indicating a delay bound value of a sidelink (SL) channel state information (CSI) report;
receiving, from the first terminal, sidelink control information (SCI) including CSI request information;
generating SL CSI by performing a measurement operation based on a reference signal received from the first terminal; and
transmitting the SL CSI to the first terminal within a time period corresponding to the delay bound value from a time of receiving the CSI request information.

11. . The operation method according to claim 10, wherein when the time period ends, the SL CSI is not transmitted to the first terminal.

12. . The operation method according to claim 10, wherein the delay bound value is set sidelink- specifically.

13. . The operation method according to claim 10, wherein the delay bound value is set in units of slots, and starts from the time of receiving the CSI request information.

14. . The operation method according to claim 10, wherein the delay bound value is set independently from a type of the SL CSI, and the type of the SL CSI varies according to information included in the SL CSI.

15. . The operation method according to claim 10, wherein the SL CSI includes a channel quality indicator (CQI) and a rank indicator (RI).

16. . A first terminal in a communication system, the first terminal comprising:
a processor; and
a memory configured to store at least one instruction executed by the processor,
wherein the at least one instruction is executed to:
transmit information indicating a delay bound value of a sidelink (SL) channel state information (CSI) report to a second terminal;
transmit sidelink control information (SCI) including CSI request information to the second terminal; and
perform a monitoring operation to receive the SL CSI of the second terminal within a time period corresponding to the delay bound value from a time of transmitting the CSI request information.

17. . The first terminal according to claim 16, wherein the at least one instruction is further executed to retransmit the CSI request information when the SL CSI of the second terminal is not received within the time period, and in response to the CSI request information being retransmitted, a reset delay bound value is used instead of the delay bound value, and the reset delay bound value is greater than or less than the delay bound value.

18. . The first terminal according to claim 16, wherein the delay bound value is set sidelink-specifically, and is used for unicast sidelink communication.

19. . The first terminal according to claim 16, wherein the delay bound value is set in units of slots, and starts from the time of transmitting the CSI request information.

20. . The first terminal according to claim 16, wherein the SL CSI includes a channel quality indicator (CQI) and a rank indicator (RI).
